# EUROPEAN PATENT APPLICATION

(11) **EP 3 674 061 A1**
(43) Date of publication of application: **01.07.2020**
(21) Application number: 19219923.0
(22) Date of filing: 27.12.2019
(51) Int. Cl.: B29C 64/118, B29C 64/209, B33Y 70/10, B33Y 10/00, B33Y 30/00

(54) **ADDITIVE MANUFACTURING DEVICE THAT APPLIES A FIELD TO PROVIDE DIRECTIONAL CONTROL OF FUNCTIONAL MATERIAL**

(30) Priority: 31.12.2018 US 201816236852
(71) Applicant: Palo Alto Research Center Incorporated, Webster, NY 14580 (US)
(72) Inventor: BENEDICT, Michael, Palo Alto, CA California 94301 (US); UNIDAD, Jerome, Palo Alto, CA California 94304 (US); MURPHY, Kathryn F., San Francisco, CA California 94114 (US)
(74) Representative: Gill Jennings & Every LLP

(57) **Abstract**

An apparatus has a dispensing unit (304) that causes a feedstock (306) to flow out of an orifice of the dispensing unit where the flow exits toward a build surface (314). The feedstock has a functional material (306a) and a flowable material (306b). The build surface and dispensing unit are moved relative to one another such that the flow exiting the orifice additively manufactures a part. A field generator (320) emits a field onto the fluid flow to align the functional material. The field changes over time such that functional material has selectably variable orientation within a volume of the part.

## Description

The present disclosure is directed to an additive manufacturing device that applies a field to provide directional control of embedded particles. In one embodiment, an apparatus has a dispensing unit that causes a feedstock to flow out of an orifice of the dispensing unit where the flow exits toward a build surface. The feedstock has a functional material and a flowable material. The build surface and dispensing unit are moved relative to one another such that the flow exiting the orifice additively manufactures a part. A field generator emits a field onto the fluid flow to align the functional material. The field changes over time such that functional material has selectably variable orientation within a volume of the part.

In another embodiment, an apparatus includes a feeding mechanism that receives a feedstock that comprises a functional material and a flowable material. The feeding mechanism causes the flowable material to achieve a flow that carries the functional material in a flow direction towards an orifice where the flow exits towards a build surface. The build surface and orifice are moved relative to one another such that the flow exiting the orifice additively manufactures a part. A field generator is located at or before the orifice and emits a field onto the fluid flow. The field aligns the functional material and has at least one component normal to the flow direction. The field is varied over time via the field generator such that functional material has selectably variable orientation within a volume of the part. These and other features and aspects of various embodiments may be understood in view of the following detailed discussion and accompanying drawings.
FIGS. 1 and 2 are diagrams of an additive manufacturing feedstock according to an example embodiment;
FIG. 3 is a diagram of an extrusion system according to an example embodiment;
FIGS. 4 and 5 are diagrams of an extrusion apparatus according to an example embodiment;
FIG. 6 is a diagram of a field generator according to an example embodiment;
FIG. 7 is an isometric view of a manufactured part according to an example embodiment; and
FIG. 8 is a flowchart of a method according to an example embodiment.

The present disclosure relates to additive manufacturing processes. Additive manufacturing has lifted many of the limitations associated with traditional fabrication. Additive manufactured parts may include complex geometric and topological structures and multi-material microstructures to achieve improved performance such as high stiffness per weight, high surface area per volume for heat transfer, and so on. The present disclosure relates to additive manufacturing devices and methods that can be used to create composite structures with controlled directional features.

In various embodiments described below, external fields are used to orient portions of a composite material that is used in an extruded additive manufacturing process. This technology enables composite systems with the advantages and abilities of 3-D printing, the strength and unique capabilities of composites, and the ability to control the composites properties in three dimensions at all points within a single part. The process works by taking advantage of a large change in viscosity during the printing process. The embedded particles are first oriented in the lower viscosity portion of the process by a three-dimensional external field. The particles are then locked into places as the material hardens (either by curing or cooling) and viscosity rises.

The objects formed using these processes may be composites of polymers (or other flow-able material) and other materials using feedstocks comprising powders of polymer and materials with field-specific anisotropic properties (e.g. magnetic, electric, thermal, etc.). The polymer forms the matrix and one or more other components are oriented within the polymer matrix using external fields to give enhanced properties. The method allows for voxel-level control of field-specific properties (e.g., magnetization, polarization) in the printed part. Note that the flowable material need not be a polymer. The method may also apply to other materials such as metals (e.g., solder), glass, plant and animal waxes, etc.

In one embodiment, a mixture of a flowable material (e.g., a polymer) and orientable/functionally-anisotropic materials (referred to herein as "functional materials") is used to create parts with on-demand patterning of the field-specific property within each voxel. For example, the feedstocks can have permanent, internal magnetic or electric fields where the orientation of the field can be controlled in three dimensions at the voxel level during printing. The polymer component is liquefied together with the filler and extruded in the presence of an external field to create a permanent orientation in the solid part. In other cases, the orientation of functional materials can, instead of or in addition to orienting magnetic fields, result in other directionally oriented properties, such as structural strength and heat transfer (e.g., conductivity).

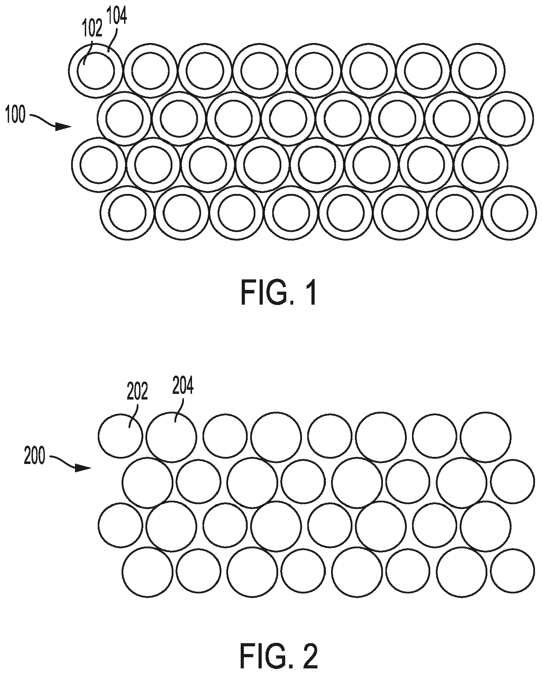

The feedstock can be a mixture of the flowable material and functional material plus other components, for example surfactants/compatibilizers to help with adhesion or materials to help with the polymer flow. In FIGS 1 and 2, diagrams illustrate feedstock 100, 200 according to example embodiments. As seen in FIG. 1, the feedstock 100 is a granulate composite, with the functional material 102 being encapsulated by a polymer 104 or other flowable materials. An example of such composite feedstocks could be samarium cobalt permanent magnet (SmCo) core 102 with polypropylene (PP) coating 104. As seen in FIG. 2, the feedstock 200 could instead or in addition include separate functional material 202 and flowable material 204 mixed together.

Note that embodiments described herein may utilize any shape and proportion of the feedstock components. For example, the functional and flowable materials may be configured as fibers, shards, etc. The flowable material may be a solid at the working temperature of the resulting device, e.g., room temperature, and is heated to allow it to flow together with the functional material, where it again hardens and fixes the orientation of the functional material. In other embodiments, the flowable material uses chemical reactions to assist or cause hardening. For example, the flowable material may be in a liquid state at the working temperature (e.g., room temperature) and thereby does not require melting, and may be cured by the application of heat and/or light after being deposited. The functional materials may include ferrous and non-ferrous metals, dielectrics, carbon fiber, graphene, etc. Further, the feedstock may be provided in other forms, such as block, filament, liquid solution, etc.

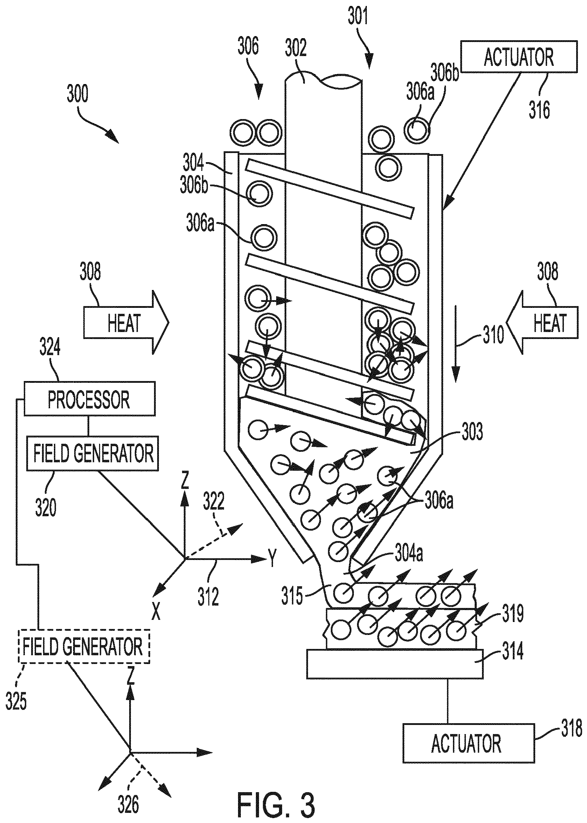

In FIG. 3 a schematic diagram illustrates an extrusion system 300 according to an example embodiment. The extrusion system 300 includes an apparatus with a feeding mechanism 301 that moves feedstock 306 into a dispensing unit 304. In this example, the feeding mechanism 302 is a feed screw housed within a nozzle, the nozzle acting as the dispensing unit 304. Feedstock 306 is fed into the feed screw where it heated to form a fluid flow 303 that is directed in a flow direction 310 (which corresponds to the z-axis in the illustrated coordinate system 312) towards an orifice 304a of the dispensing unit 304 The feedstock 306 includes both a functional material 306a and a flowable material 306b as previously described.

A heat source, indicated by arrows 308, may optionally be used to heat the feedstock 306 which is at least partially melted to create a uniform mixture within the fluid flow 303, which carries the functional material 306a within. Note that as described above, the flowable material may be liquid at the working temperature (e.g., room temperature) such that melting is not needed. The fluid flow 303 exits the orifice 304a where it is deposited onto a build surface 314, indicated here as region of deposition 315. One or both of the dispensing unit 304 and build surface 314 can be moved relative to one another, e.g., via actuators 316, 318. The material deposited on the build surface 314 (or previously deposited feedstock on the build surface 314) will cool and solidify, rapidly increasing in viscosity and locking the particles 306a into their intended orientation. Additional cooling can be provided depending on the ratio of viscosity to field strength for the composite materials, e.g., via fans, chemical reactions of the flowable material when in contact with ambient air. A part 319 can be formed by successive passes of the flow 303 in a predetermined pattern. The part 319 is formed of a polymer matrix of the solidified functional material 306a and flowable material 306b.

The movement of the actuators 316, 318 together with the extrusion of material from the dispensing unit 304 facilitates additively forming the part 319 on the surface 314. Note that the relative movement of the dispensing unit 304 and building surface 314 via actuators 316, 318 can be purely translational (e.g., three degrees of freedom) or any combination of rotational and translational (e.g., up to six degrees of freedom). The build surface 314 may be planar as shown, or other shapes, e.g., a rotating cylinder that facilitates depositing cylindrical shapes.

One or more field generators 320 are located proximate to the region of deposition, e.g., near the orifice 304a of the dispensing unit 304 where it affects the material flow before leaving the orifice 304a. The field generator 320 may be outside of the dispensing unit 304 or within the dispensing unit 304. In the latter case, the field generator 320 may be in contact with the flow 303. The field generator 320 generates a field 322 that can be oriented in three dimensions. The field 322 can be, for example, electric or magnetic fields that align the polarized particles and/or induce internal polarization in the materials. The field 322 may be configured to have at least one component normal/perpendicular to the flow direction 310, e.g., a vector that represents the field 322 having either a positive or negative component on the xy-plane. In the case of SmCo these field generators could be electromagnets which serve to either magnetize the particles (if the feedstock is unmagnetized) or rotate the particles into alignment via the magnetic field (if the feedstock is already magnetized).

Other examples of the field 322 could be electrostatic fields used to manipulate dielectric materials which could be pre-charged, or charged via the same field generators. The field 322 could include AC electric and/or magnetic fields which could manipulate diamagnetic but electrically conductive materials via Lorentz forces, or electrostatic fields which could orient ferroelectric materials. In other cases, acoustic fields could be to use vibrations to orient specially-shaped particles in particular directions.

As indicated by second field generator 325, a second field 326 could also be applied to the flow 303 in combination with the first field 322. The second field 326 could be of a different type (e.g., electrical, magnetic) than the first field 322. As seen in the figure, the fields 322, 326 could have different orientations at any given instant of time. The fields 322, 326 could operate on a single type of functional material 306a, for example enhancing the orientation thereof. In other cases, multiple types of functional material 306a may be used, each being affected differently by the different fields 322. Note that any functions ascribed herein to the field generator 322 may be equally applied to the second field generator 326.

As indicated by the arrows on the particles of functional materials 306a within the heated area of the dispensing unit 304, the functional material particles 306a transition from a disordered/random alignment to being aligned by the field 322 as the particles 306a are deposited onto the building surface 314. The field generator 320 is configured by a processor 324 that changes an angle, direction and/or magnitude of the field 322 as a function of time. Note that direction and angle of the field 322 can be interdependent. For example, a 180 degree change in angle will have the same result as changing the direction of the field vector 322 between positive and negative, which can be accomplished in some embodiments by changing a direction of current in the field generator 322. The changes in the field 322 applied by the processor 324is coordinated with the change in relative orientation between the nozzle 304 and building surface 314 via the processor 324 (which is also directly or indirectly coupled to the actuators 316, 318) facilitating selectively variable orientation of the functional materials 306a within a volume of the part 319.

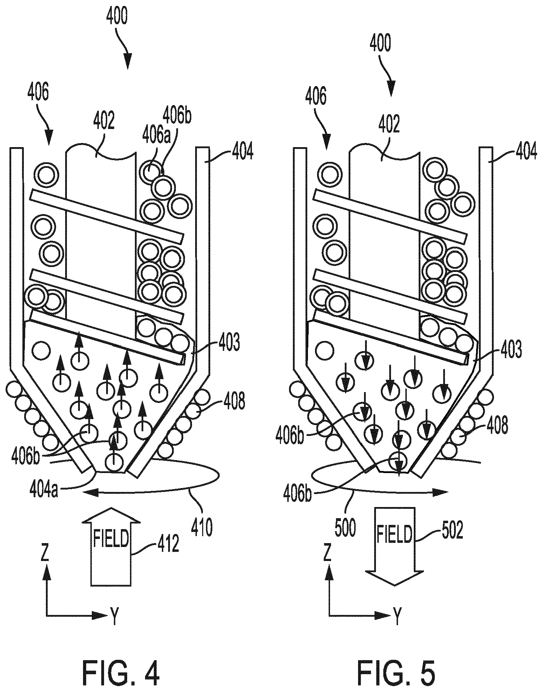

In FIGS. 4 and 5, diagram illustrates an additive manufacturing system according to another example embodiment. An apparatus 400 includes a feed screw 402 that moves feedstock 406 into a nozzle 404. As with the previous example, the feedstock 406 is fed into the feed screw 402 where it heated to form a fluid flow 403 towards an opening 404a of the nozzle 404. The feedstock 406 includes both a functional material 406a and a flowable material 406b as previously described.

In this case, an electromagnetic coil 408 is wrapped around the nozzle 404 near the opening 404a. A current is caused to flow through the coil 408, e.g., via a controller coupled to power circuitry (not shown). The current flows in a direction indicated by the arrow 410 (which is aligned with a flow direction of the feedstock 406), resulting in a magnetic field 412 being applied to the feedstock in a direction indicated by the arrow406. In FIG. 5, current 500 is applied in the opposite direction, resulting in field 502. The currents applied to the coil 408 may change both direction and magnitude to cause changes in the orientation of the particles 406b as they are deposited to form a part.

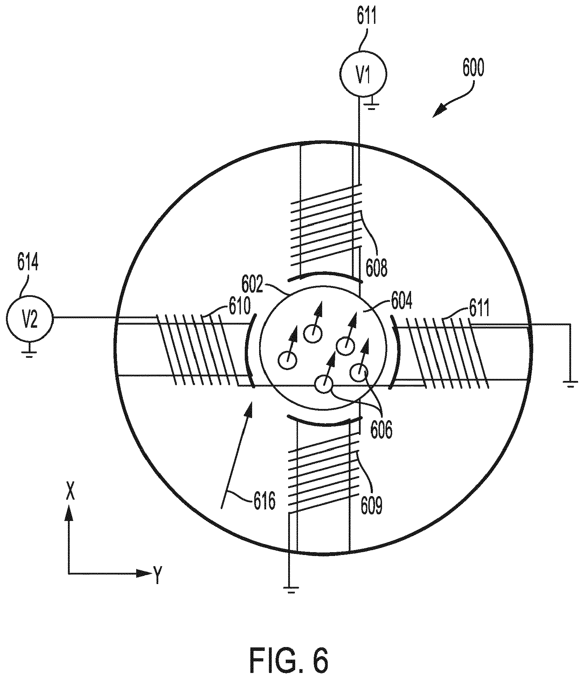

Additional field generators can be added in any of the other dimensions to enable full three-dimensional control over the composite particles. In FIG. 6, a diagram illustrates an additive manufacturing system according to another example embodiment. An apparatus 600 includes a feed mechanism 602 that moves and liquefies feedstock in a flow direction that is normal to page. The feedstock includes both a functional material 604 and flowable material particles 606 as previously described.

In this case, electromagnetic coils 608-611 are located on a plane parallel to (or tangent to) the building surface (not shown). In other embodiments, the coils 608-611 could be on another plane, e.g., the yz-plane shown in FIGS. 4-5. Two independent power sources 612, 614 are coupled to the coil pairs 608-609 and 610-611 respectively. In this example, opposing coils 608, 609 are wired in series, as are opposing coils 610, 611. In other embodiments, the opposing coil pairs could be tied together in parallel. By changing the amount of power provided by respective power sources 612, 614, the angle of a magnetic field 616 generated by the coils 608-611 can be varied due to the summation of orthogonal magnetic fields. The resultant field 616 can be combined with fields 412, 502 shown in FIGS. 4 and 5 to create any desired net field vector in 3-D space.

Note that the 3-D field in these embodiments may be configured to extend slightly beyond the orifice in the feed direction and/or in one or more directions normal to the feed direction. This allows flow exiting the orifice to a maintain a high enough temperature to bond with previously deposited material without losing the orientation applied while in the dispensing unit. This could be provided by additional field generators that apply a slightly different, secondary field to materials that were just deposited compared to the primary field applied to materials currently being deposited. The difference between the primary and second field can be determined in accordance with time-variance of the primary field as a function of nozzle-to-build surface velocity.

It will be understood that different arrangements of coils and power supplies (or other electrical control elements) can be used to achieve a similar controllably angled field. For example, coils 608-611 could be independently driven by three or more separate power supplies. Or, adjacent coils (e.g., 609-610 and 608, 611) could be tied together in parallel or series instead of opposing coils. In other embodiments, a single magnet assembly (e.g., a pair of permanent magnets and/or electromagnets) can be moved through one or more degrees of freedom around the flowing feedstock, e.g., via an actuator and bearing assembly. The embodiments described above can be applied to other types of field generators, e.g., electric or acoustic fields.

It will be understood that other features of the above-described extrusion systems are provided for purposes of illustration and not limitation. For example, while feed screws are shown moving feedstock through a dispensing unit, other feeding mechanisms may be used, such as wheels (e.g., wheels that force a filament of material though a heater and orifice), pistons, air/fluid pressure, etc. Similarly, any type of heaters may be used, include resistive heaters, combustion heaters, chemical reactions within the feedstock, etc. In some examples, the directional field applied to orient the functional material may also be used to partially or fully heat the flowable material of the feedstock, e.g., where the field is a microwave-wavelength electromagnetic field.

In any of these embodiments described above, known techniques associated with additive manufacturing, such as 3-D printing of slices onto a surface to form a 3-D object, can take advantage of directionally customized composite structures. By continuously varying the orientation of the field as the part is built up, complex three dimensional fields can be permanently embedded within the part. Composite materials are attractive since they combine different material properties. These methods enable the use of 3D printing for voxel-level manipulation of the properties of composite materials in all directions.

Using these methods and apparatuses, 3D parts can be made which have spatially dictated properties in all directions. These new materials open up new possibilities ranging from three-dimensionally shaped magnetic fields inside a single part to complex physical properties. An example of an object with a non-uniform internal magnetic polarization is the Halbach array, which arranges discrete magnets in such a way that the field on one side of the array is nearly zero, while the field on the other side is enhanced. These arrays have applications from refrigerator magnets to AC motors to electron lasers. For the use-case of magnets in motors, the use of "shaped field" (e.g., with a Halbach pattern) magnets can increase torque transfer by potentially as much as 75%. The ability to print any Halbach pattern opens up the available design space for magnets in motors, which would allow for further optimization of magnet geometry. A multitude of other applications for finely tuned Halbach arrays exist. For instance, optimal 3D arrays can be used to manipulate nanoparticles for cancer treatment.

In general, this type of manipulation of magnetic field means, it may be possible to reduce the amount of magnetic material needed for a given application. For example, rare earth magnets such as SmCo or NdFeB are much more expensive than conventional ferrites and market availability can be limited or unpredictable. The market size for rare earth magnets is on the order of $10 billion, so even a 1% reduction in material needed is significant.

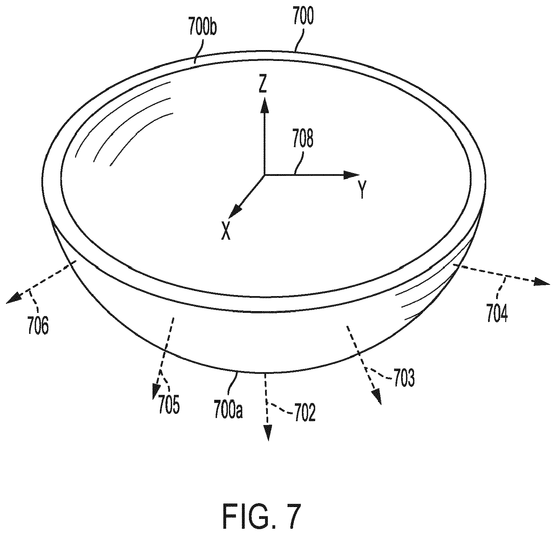

In FIG. 7, a perspective view shows an example of an additively manufactured part 700 with a 3-D shaped field according to an example embodiment. The part 700 is a magnetic half-sphere manufactured such that, on each point of it surface, the magnetic orientation is normal to the surface, as indicated by field lines 702-706. If the part 700 is formed via a 3-D printing process, the additively assembly apparatus will orient the field 702 at the bottom end 700a of the part substantially vertically (aligned with the z-axis) and the field orientations will gradually become more horizontally oriented towards the top edge, e.g., as seen with field lines 704, 706. The part 700 may be formed from the bottom 700a to top 700b, or the inverse.

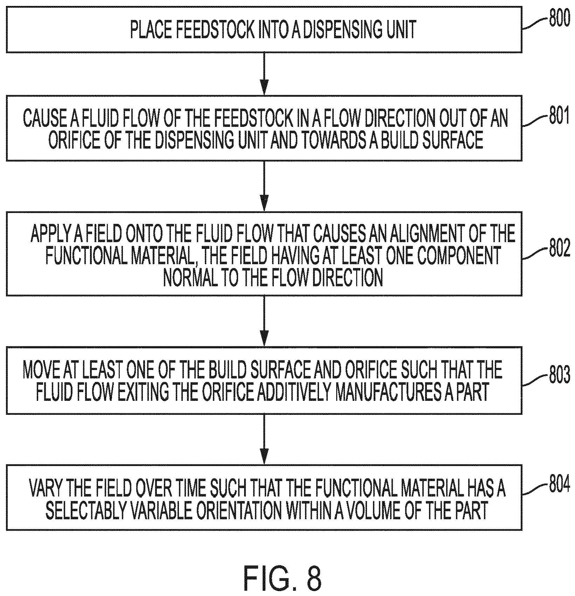

In FIG. 8, a flowchart shows a method according to an example embodiment. The method involves placing 800 feedstock into a dispensing unit. The feedstock includes a functional material and a flowable material. A fluid flow of the feedstock is caused 801 in a flow direction out of an orifice of the dispensing unit and towards a build surface. The fluid flow may be caused 801 via the application of heat and/or pressure to the feedstock. A field is emitted 802 onto the fluid flow that causes an alignment of the functional material. The alignment may be with the field or perpendicular to the field, for example. The field has at least one component normal to the flow direction. At least one of the build surface and orifice are moved 803 such that the fluid flow exiting the orifice additively manufactures a part. The field is varied 804 over time such that the functional material has a selectably variable orientation within a volume of the part.

In summary, an additive manufacturing process for composite materials allows one or more of the materials to be oriented via one or more external fields. A change in viscosity (e.g., cooling after deposition) is used to prevent the particles from moving once their orientation has been set. The external fields may be three-dimensional that exert three-dimensional control over the orientation of one or more of the components of the composite material. The controlling field can be continuously varied to affect continuous control over the composite material orientation at the voxel level. In one embodiment, a rotatable magnetic field can be generated at a printhead for the purpose of magnetizing a demagnetized ferromagnet and/or for the purpose of aligning magnetized ferromagnets. The rotatable electric field can be used to aligning electrically polarized materials. A rotatable magnetic field may be generated at a printhead via electromagnets.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

## Claims

1. An apparatus, comprising:
a feeding mechanism that receives a feedstock that comprises a functional material and a flowable material, the feeding mechanism causing the flowable material to achieve a flow that carries the functional material in a flow direction towards an orifice where the flow exits towards a build surface, one or both of the build surface and orifice being moved relative to one another such that the flow exiting the orifice additively manufactures a part; and
a field generator located at or before the orifice that emits a field onto the fluid flow, the field aligning the functional material and having at least one component normal to the flow direction, the field being varied over time via the field generator such that functional material has selectably variable orientation within a volume of the part.

2. The apparatus of claim 1, further comprising a heat source that melts the flowable material.

3. The apparatus of claim 1, wherein the external field increases a temperature of the flow.

4. The apparatus of claim 1, wherein the functional material comprises permanent magnetic material, and wherein the part has a volumetrically varying permanent magnetic field direction.

5. The apparatus of claim 1, wherein the field generator comprises a coil that generates a magnetic field.

6. The apparatus of claim 5, wherein the field generator comprises two or more coils that generate a second magnetic the magnetic field and the second magnetic field combining to form a net magnetic field that is variable over any angle in three-dimensions.

7. The apparatus of claim 1, wherein the flowable material comprises a polymer.

8. The apparatus of claim 1, wherein the functional material comprises a magnetized or demagnetized ferromagnet.

9. The apparatus of claim 1, wherein the functional material comprises graphene.

10. The apparatus of claim 1, wherein the functional material comprises a fiber.

11. The apparatus of claim 10, wherein the fiber has magnetic particles attached thereto.

12. The apparatus of claim 1, wherein the selectably variable orientation within the volume of the part comprises selectably variable magnetic orientations of the functional material.

13. The apparatus of claim 1, wherein the selectably variable orientation within the volume of the part comprises selectably variable anisotropic structure of the functional material.

14. The apparatus of claim 8, wherein the selectably variable orientation within the volume of the part comprises selectably variable heat transfer properties of the functional material.

15. The apparatus of claim 1, wherein any combination of an angle, a magnitude, and a direction of the field is varied over time.

16. A method comprising:
placing feedstock into a dispensing unit, the feedstock comprising a functional material and a flowable material;
causing a flow of the feedstock in a flow direction out of an orifice of the dispensing unit and towards a build surface;
applying a field onto the fluid flow that causes an alignment of the functional material, the field having at least one component normal to the flow direction;
moving at least one of the build surface and orifice such that the fluid flow exiting the orifice additively manufactures a part; and
varying the field over time such that the functional material has a selectably variable orientation within a volume of the part.

17. The method of claim 16, further comprising heating the feedstock to cause the flow.

18. An apparatus, comprising:
a dispensing unit that causes a feedstock to flow out of an orifice of the dispensing unit, the flow exiting the orifice toward a build surface, the feedstock comprising a functional material and a flowable material, at least one of the build surface and dispensing unit being moved relative to one another such that the flow exiting the orifice additively manufactures a part; and
a field generator that emits a first field onto the fluid flow to align the functional material, an angle of the first field changing over time such that functional material has selectably variable orientation within a volume of the part.

19. The apparatus of claim 18, further comprising a second field generator that emits a second field onto the fluid flow, the second field of a different type than that of the first field and variable over time to affect the selectably variable orientation of the functional materials within the volume of the part.

20. The apparatus of claim 19, wherein the feedstock comprises a second functional material different than the first functional material, wherein the first and second fields affect the functional material and second functional materials differently.

21. The apparatus of claim 19, wherein at least one of a magnitude and direction of the field changes over time together with the angle of the field.

22. The apparatus of claim 18, wherein the angle of the first field is changed in three dimensions.
